# EUROPEAN PATENT APPLICATION

(11) **EP 4 693 606 A1**
(43) Date of publication of application: **11.02.2026**
(21) Application number: 23929902.7
(22) Date of filing: 27.10.2023
(51) Int. Cl.: H01M 10/613, H01M 10/615, H01M 10/655

(54) **BATTERY PACK AND ELECTRIC DEVICE**

(30) Priority: 31.03.2023 CN 202320802114 U
(71) Applicant: BYD Company Limited, Shenzhen, Guangdong 518118 (CN)
(72) Inventor: YU, Peiwen, Shenzhen, Guangdong 518118 (CN); YI, Ning, Shenzhen, Guangdong 518118 (CN); ZHAI, Jian, Shenzhen, Guangdong 518118 (CN); XIE, Yiming, Shenzhen, Guangdong 518118 (CN); NIE, Chengming, Shenzhen, Guangdong 518118 (CN)
(74) Representative: Mathys & Squire
(86) International application number: PCT/CN2023/126967
(87) International publication number: WO 2024/198332

(57) **Abstract**

Provided are a battery pack (100) and an electric apparatus. The battery pack (100) includes: a battery cell (10); and a heat exchange assembly (20). The heat exchange assembly (20) is assembled in cooperation with the battery cell (10) to exchange heat with the battery cell (10). The heat exchange assembly (20) includes a cooling member (21) and a heating member (22) that are stacked. The heat exchange assembly (20) has an exhaust channel (23) corresponding to an explosion-proof portion of the battery cell (10).

## Description

### CROSS-REFERENCE TO RELATED APPLICATION

This application is based on Chinese Patent Application No. 202320802114.2 filed on March 31, 2023, and claims the priority of the foregoing Chinese Patent Application, which is incorporated herein by reference in its entirety.

### TECHNICAL FIELD

This application relates to the field of battery packs, and in particular, to a battery pack and an electric apparatus including the battery pack.

### BACKGROUND

In related technologies, a cooling system exchanges heat with cells of a battery pack of an electric apparatus to adjust a temperature of the cells, so that the temperature of the cells is within an appropriate temperature range. For example, a vehicle uses a direct cooling system to cool the cells, so that the temperature of the cells is within the appropriate temperature range. However, existing cooling systems provide poor temperature control of the battery pack, reducing working performance of the battery pack, and requiring further optimization.

### SUMMARY

This application is intended to resolve at least one of the technical problems existing in the prior art. Therefore, one objective of this application is to provide a battery pack. The battery pack has a good temperature control effect, can avoid excessive gas pressure in the battery pack during thermal runaway, and can further reduce a risk of heat diffusion.

This application further provides an electric apparatus.

The battery pack according to this application includes: a battery cell; and a heat exchange assembly. The heat exchange assembly cooperates with the battery cell to exchange heat with the battery cell. The heat exchange assembly includes a cooling member and a heating member that are stacked. The cooling member is configured to cool the battery cell. The heating member is configured to heat the battery cell. The heat exchange assembly has an exhaust channel corresponding to an explosion-proof portion of the battery cell.

According to the battery pack of this application, in the heat exchange assembly, the cooling member and the heating member are separately disposed, so that temperature control effect of the battery pack can be improved, a temperature of the battery cell can be within an appropriate temperature range, and working performance of the battery pack can be improved. In addition, the heat exchange assembly is constructed to include the exhaust channel, so that gas discharged from the battery cell through the explosion-proof portion can be discharged from the battery pack through the exhaust channel to avoid excessive gas pressure in the battery pack. Moreover, the cooling member can exchange heat with high-temperature gas in the exhaust channel to reduce temperature of the high-temperature gas and reduce risk of heat diffusion. In addition, the heat exchange assembly is constructed to include the exhaust channel, so that the exhaust channel and the heat exchange assembly can be disposed in an integrated manner. This can reduce the quantity of structural components of a battery and improve an integration level of the battery pack.

The electric apparatus according to this application includes the battery pack mentioned above.

In the electric apparatus according to this application, the heat exchange assembly including the cooling member and the heating member that are stacked is disposed, so that the battery cell can not only be cooled, but can also be heated. Therefore, when the battery cell is in a low temperature state, the heat exchange assembly can be used to increase the temperature of the battery cell, so that the temperature of the battery cell is within the appropriate temperature range, and the working performance of the battery pack is improved.

Additional aspects and advantages of this application are given in part in the following descriptions, become apparent in part from the following descriptions, or be learned from the practice of this application.

### BRIEF DESCRIPTION OF THE DRAWINGS

FIG. 1 is a diagram of a battery pack according to an embodiment of this application;
FIG. 2 is an exploded view of a battery pack according to an embodiment of this application;
FIG. 3 is a diagram of a heat exchange assembly according to an embodiment of this application;
FIG. 4 is a diagram of a cooling member according to an embodiment of this application;
FIG. 5 is a diagram of a cooling member according to an embodiment of this application from another perspective;
FIG. 6 is a diagram of a battery pack according to an embodiment of this application from another perspective; and
FIG. 7 is a partially enlarged view of a cross-sectional view of a section A-A in FIG. 6.

### DESCRIPTION OF EMBODIMENTS

The following describes embodiments of this application in detail. Examples of the embodiments are shown in the accompanying drawings, and same or similar reference numerals throughout the accompanying drawings indicate same or similar components or components having same or similar functions. The following embodiments described with reference to the accompanying drawings are exemplary, are intended to explain this application, and shall not be understood as a limitation of this application.

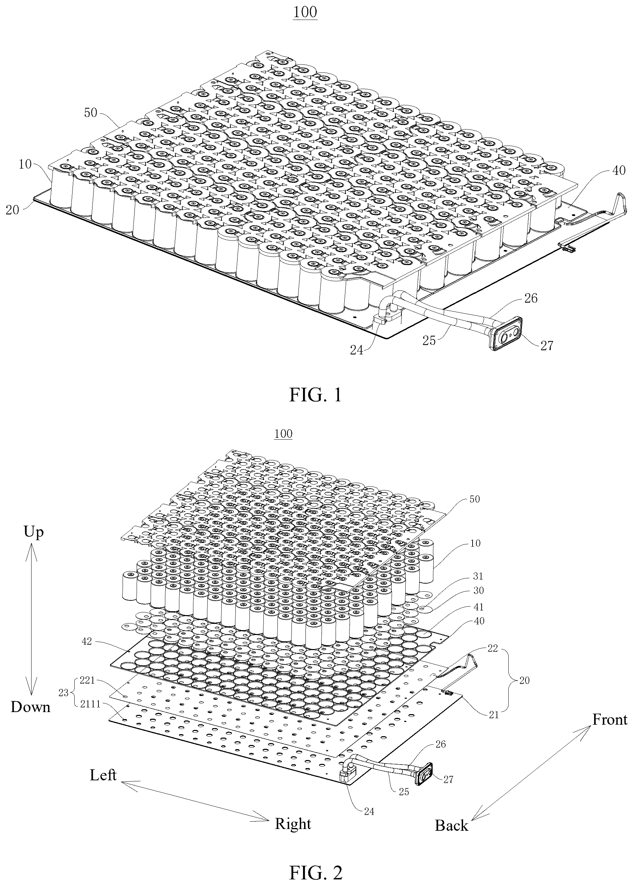

A battery pack 100 according to an embodiment of this application is described below with reference to FIG. 1 to FIG. 7.

As shown in FIG. 1, FIG. 2, and FIG. 7, the battery pack 100 according to an embodiment of this application includes: a battery cell 10 and a heat exchange assembly 20.

There is at least one battery cell 10. Preferably, there are a plurality of battery cells 10. The plurality of battery cells 10 may be arranged in sequence in a left-right direction as shown in FIG. 2 to form a row of battery group. Further, there may be a plurality of rows of battery groups, and the plurality of rows of battery groups may be arranged in sequence in a front-back direction as shown in FIG. 2, so that the battery pack 100 has a large quantity of battery cells 10, to enable the battery pack 100 to have a high capacity. It is understandable that each row of battery group may be arranged in a staggered manner or may not be arranged in a staggered manner.

The heat exchange assembly 20 is assembled in cooperation with the battery cell 10, and the heat exchange assembly 20 can exchange heat with the battery cell 10 to adjust a temperature of the battery cell 10. The heat exchange assembly 20 includes a cooling member 21 and a heating member 22, and the cooling member 21 and the heating member 22 are stacked. Optionally, the cooling member 21 and the heating member 22 may be stacked in a height direction of the battery pack 100 (that is, an up-down direction shown in FIG. 2). The cooling member 21 is configured to cool the battery cell 10 to reduce the temperature of the battery cell 10, and the heating member 22 is configured to heat the battery cell 10 to increase the temperature of the battery cell 10.

It may be understood that the battery cell 10 has a high requirement for a working temperature. If the working temperature is high, the battery cell 10 is prone to overcharging. This is likely to affect a life of the battery cell 10. If the working temperature is low, problems such as slow charging and discharging speeds of the battery cell 10 and reduced battery performance may be caused. The heat exchange assembly 20 is disposed, so that when the working temperature of the battery cell 10 is high, the cooling member 21 may cool the battery cell 10, and when the working temperature of the battery cell 10 is low, the heating member 22 may heat the battery cell 10. This makes the temperature of the battery cell 10 within an appropriate temperature range, avoids overcharging of the battery cell 10, prolongs the life of the battery cell 10, and increases the charging and discharging speeds of the battery cell 10, so as to improve working performance of the battery pack 100.

In addition, the cooling member 21 and the heating member 22 are separately disposed, so that manufacturing costs of the cooling member 21 can be largely reduced. For example, because the cooling member 21 and the heating member 22 are separately disposed, the cooling member 21 only needs to have a cooling function but does not need to have a heating function. Therefore, there is no need to dispose an additional heating device at the front end of a circulation flow path of the cooling member 21 to heat a heat exchange medium flowing into the cooling member.

Further, the cooling member 21 and the heating member 22 are separately disposed, so that an original cooling system of the electric apparatus can be used to provide a coolant for the cooling member 21, that is, the cooling member 21 can be connected to the original cooling system of the electric apparatus, to reduce the manufacturing costs of the heat exchange assembly 20 to a specific extent. For example, the cooling member 21 may be connected to an air-conditioning system of a vehicle.

In addition, the cooling member 21 and the heating member 22 are separately disposed, so that compared with the prior art, the temperature of the battery pack can be better adjusted. Regardless of whether the temperature of the battery cell 10 is low or high, the heat exchange assembly 20 of this application can be used to adjust the temperature of the battery cell 10, so that the temperature of the battery cell 10 is within the appropriate temperature range, and the working performance of the battery pack 100 can be further improved.

Optionally, the battery pack 100 of this application may be disposed on the vehicle, and the cooling member 21 of the battery pack 100 may be connected to the air-conditioning system of the vehicle. Specifically, the cooling member 21 of the battery pack 100 may be disposed in communicate with a condenser and an evaporator of the air-conditioning system of the vehicle, that is, the cooling member adopts a direct cooling system. The direct cooling system may cool the battery by using a refrigerant and has better cooling effect and a faster cooling speed. In addition, the cooling member may alternatively adopt a liquid cooling system. The liquid cooling system implements cooling by circulating a coolant inside.

In addition, the heating member 22 is disposed, and the heating member 22 and the cooling member 21 are stacked, so that the heat exchange assembly 20 can have both cooling and heating functions. This can not only meet a cooling requirement of the battery cell 10, but can also meet a heating requirement of the battery cell 10, to improve a temperature adjustment range.

Further, as shown in FIG. 2, the heat exchange assembly 20 has an exhaust channel 23 corresponding to an explosion-proof portion of the battery cell 10. In this arrangement, when the battery cell 10 discharges gas through the explosion-proof portion, the discharged gas may be discharged from the battery pack 100 through the exhaust channel 23 of the heat exchange assembly 20 to avoid excessive gas pressure in the battery pack 100. In addition, when high-temperature gas discharged from the battery cell 10 through the explosion-proof portion is located in the exhaust channel 23, the cooling member 21 can exchange heat with the high-temperature gas to reduce a temperature of the high-temperature gas and reduce a risk of heat diffusion.

In this way, the cooling member 21 and the heating member 22 are separately disposed, so that the temperature of the battery pack can be better adjusted, the temperature of the battery cell 10 can be within the appropriate temperature range, and working performance of the battery pack 100 is improved. In addition, the heat exchange assembly 20 is constructed to include the exhaust channel 23, so that the gas discharged from the battery cell 10 through the explosion-proof portion can be discharged from the battery pack 100 through the exhaust channel 23 to avoid excessive gas pressure in the battery pack 100. Moreover, the cooling member 21 can exchange heat with the high-temperature gas in the exhaust channel 23 to reduce the temperature of the high-temperature gas and reduce the risk of heat diffusion.

In addition, the heat exchange assembly 20 is constructed to include the exhaust channel 23, so that the exhaust channel 23 and the heat exchange assembly 20 may be disposed in an integrated manner. This can reduce the quantity of structural components of the battery pack 100 and improve an integration level of the battery pack 100.

In some embodiments of this application, as shown in FIG. 2, the battery cell 10 is a cylindrical battery cell 10. In the height direction of the battery pack 100, one end of the battery cell 10 that is away from the heat exchange assembly 20 has a terminal pole. The terminal pole may be a positive terminal pole or a negative terminal pole. One end of the battery cell 10 that is close to the heat exchange assembly 20 has the explosion-proof portion, and the explosion-proof portion of the battery cell 10 may be disposed corresponding to the exhaust channel 23 of the heat exchange assembly 20. This arrangement can make the gas discharged from the battery cell 10 through the explosion-proof portion quickly discharged into the exhaust channel 23. In other embodiments of this application, the battery cell may alternatively be a square or soft-pack battery, and an explosion-proof valve of the battery is disposed on one side of the battery that is close to the heat exchange assembly.

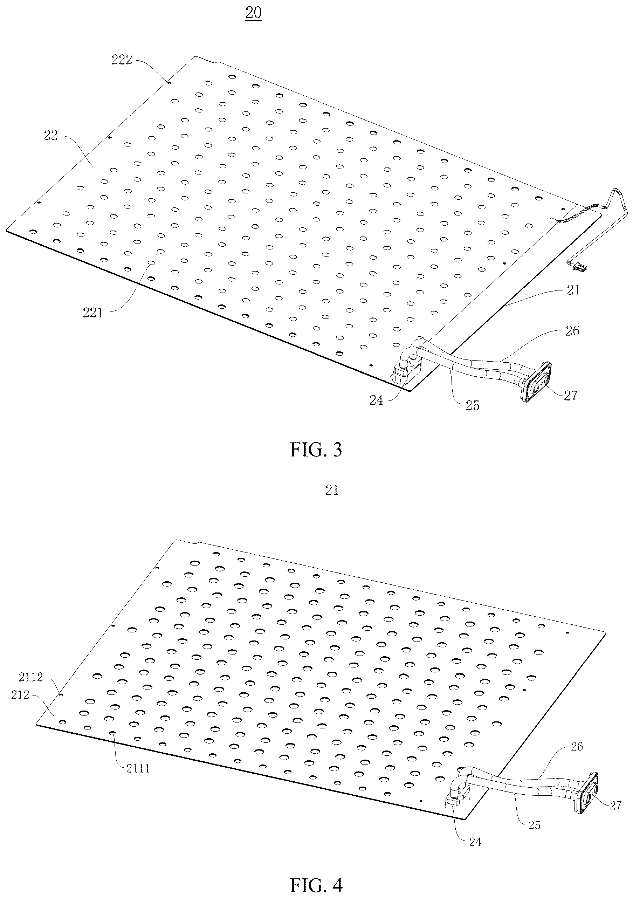

In some embodiments of this application, as shown in FIG. 2 and FIG. 3, the heating member 22 is fastened to the cooling member 21, and the heating member 22 is located between the cooling member 21 and the battery cell 10. For example, in the height direction of the battery pack 100 (that is, the up-down direction shown in FIG. 2), the heating member 22 is located below the battery cell 10 and above the cooling member 21. This arrangement helps fasten the heating member 22, makes the heating member 22 firmly assembled, can make the heating member 22 and the battery cell 10 close to each other, and helps the heating member 22 quickly heat the battery cell 10.

In some embodiments of this application, as shown in FIG. 2 and FIG. 4, the cooling member 21 has a heat conduction surface. The heat conduction surface is disposed opposite to the battery cell 10, that is, the heat conduction surface is located on one side of the cooling member 21 that is close to the battery cell 10, and the heating member 22 is disposed on the heat conduction surface. The heat conduction surface enables rapid heat exchange between the cooling member 21 and the battery cell 10. This helps ensure a rate of cooling the battery cell 10 by the heat exchange assembly 20.

Further, as shown in FIG. 2 and FIG. 4, the heat conduction surface is constructed as a plane. Constructing the heat conduction surface as the plane facilitates disposition of the heating member 22 on the heat conduction surface and reduction of difficulty of assembling the battery pack 100, and helps ensure that cooling rates of the plurality of battery cells 10 are approximately the same, so that temperatures of the plurality of battery cells 10 can tend to be consistent, and a service life of the battery pack 100 is prolonged.

Further, a recess is provided on one side of the cooling member 21 that faces the heating member 22. The recess comprises the heat conduction surface, and the heating member 22 is disposed in the recess. This arrangement can provide space on the cooling member 21 for disposing the heating member 22, so that components in the battery pack 100 are compactly disposed, to dispose a large quantity of battery cells 10 and increase a capacity of the battery pack 100.

In an embodiment, the heat conduction surface is constructed as a plane. Constructing the heat conduction surface as the plane facilitates disposition of the heating member 22 on the heat conduction surface and reduction of difficulty of assembling the battery pack 100, and helps ensure that cooling rates of the plurality of battery cells 10 are approximately the same, so that the temperatures of the plurality of battery cells 10 can tend to be consistent, and the service life of the battery pack 100 is prolonged. In addition, the heating member 22 is disposed in the recess, so that heat dissipation effects of the cooling member 21 on the battery cell 10 can be enhanced. This helps ensure that the cooling rates of the plurality of battery cells 10 are approximately the same.

Further, a depth of the recess is equal to a thickness of the heating member 22, that is, an upper surface of the heating member 22 is flush with an upper surface of the cooling member 21. This arrangement can make structures of the heating member 22 and the cooling member 21 compatible and can make an upper surface of the entire heat exchange assembly 20 flat, so that the heat dissipation effect of the cooling member 21 on the battery cell 10 can be further enhanced. This helps ensure that the cooling rates of the plurality of battery cells 10 are approximately the same.

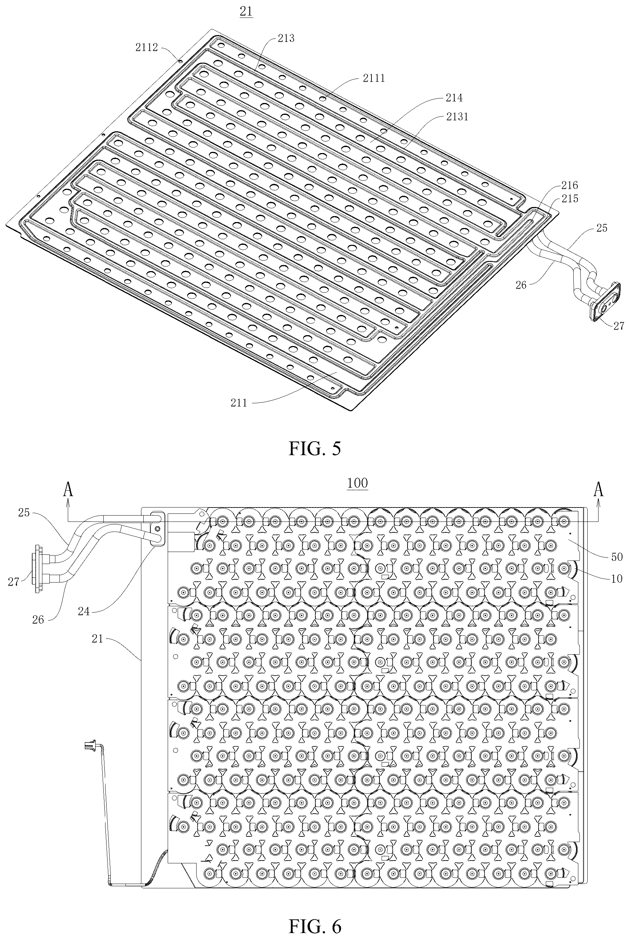

Optionally, as shown in FIG. 4 and FIG. 5, the cooling member 21 may include a first cooling plate 211 and a second cooling plate 212. The first cooling plate 211 and the second cooling plate 212 may be stacked in the height direction of the battery pack 100 (that is, the up-down direction shown in FIG. 2). Specifically, the first cooling plate 211 may be disposed below the second cooling plate 212, and the coolant may flow between the first cooling plate 211 and the second cooling plate 212 to exchange heat with the battery cell 10. A surface of the second cooling plate 212 that faces away from the first cooling plate 211 is the heat conduction surface.

In some embodiments of this application, as shown in FIG. 3 to FIG. 5, the cooling member 21 is provided with a first positioning hole 2112, and the heating member 22 is provided with a second positioning hole 222. In the height direction of the battery pack 100 (that is, the up-down direction shown in FIG. 2), the first positioning hole 2112 directly faces the second positioning hole 222. The first positioning hole 2112 cooperates with the second positioning hole 222, so that a relative position of the cooling member 21 and the heating member 22 can be ensured to be accurate, difficulty of assembling the heat exchange assembly 20 can be reduced, and efficiency of assembling the heat exchange assembly 20 is improved.

Optionally, during assembly, an adhesive may be applied to the bottom of the heating member 22, then the first positioning hole 2112 and the second positioning hole 222 are used for positioning, and the bottom of the heating member 22 is bonded to the heat conduction surface of the cooling member 21. In an embodiment, a thermally-conductive adhesive may be applied to the bottom of the heating member 22, so that when the cooling member 21 cools the battery cell 10, the cooling member 21 can exchange heat with the battery cell 10 more quickly. This helps improve the cooling rate of the heat exchange assembly 20 on the battery cell 10.

In some embodiments of this application, as shown in FIG. 2 to FIG. 5, the cooling member 21 has a first exhaust hole 2111, the heating member 22 has a second exhaust hole 221 corresponding to the first exhaust hole 2111, and the first exhaust hole 2111 and the second exhaust hole 221 form the exhaust channel 23. The quantity of first exhaust holes 2111 is the same as the quantity of second exhaust holes 221, and in the height direction of the battery pack 100 (that is, the up-down direction shown in FIG. 2), a plurality of first exhaust holes 2111 and a plurality of second exhaust holes 221 are provided in a one-to-one correspondence. In addition, the quantity of the battery cells 10 is the same as the quantity of second exhaust holes 221, and the plurality of battery cells 10 and the plurality of second exhaust holes 221 are provided in a one-to-one correspondence.

That is, the quantity of battery cells 10, the quantity of first exhaust holes 2111, and the quantity of second exhaust holes 221 are the same. According to this setting, when each battery cell 10 discharges gas through the explosion-proof portion, the discharged gas may be discharged from the battery pack 100 through the second exhaust hole 221 and the first exhaust hole 2111 that are provided corresponding to the battery cell 10. This helps improve use safety of the battery pack 100.

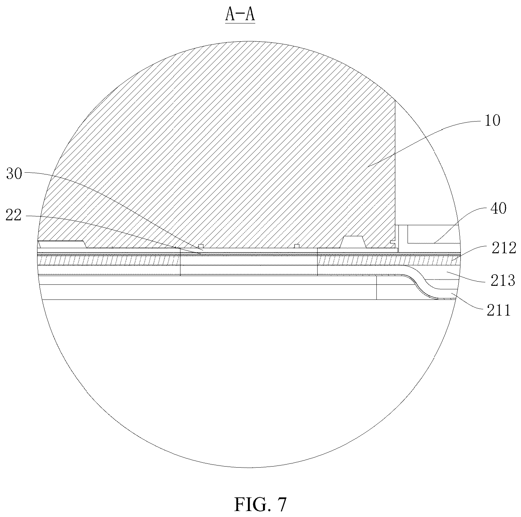

In some embodiments of this application, as shown in FIG. 2 and FIG. 7, the battery pack 100 further includes a heat conduction portion 30. In the up-down direction shown in FIG. 2, the heat conduction portion 30 is disposed between the battery cell 10 and the heating member 22, and the heat conduction portion 30 may conduct heat between the battery cell 10 and the heating member 22. In this way, whether at a time when the cooling member 21 cools the battery cell 10 or at a time when the heating member 22 heats the battery cell 10, heat can be quickly exchanged with the battery cell 10 through the heat conduction portion 30. This helps improve a temperature regulation rate of the heat exchange assembly 20 on the battery cell 10.

In addition, as shown in FIG. 2, the heat conduction portion 30 has an avoidance hole 31. The avoidance hole 31 is configured to avoid the explosion-proof portion. The avoidance hole 31 is provided opposite to the exhaust channel 23. The quantity of avoidance holes 31, the quantity of battery cells 10, the quantity of first exhaust holes 2111, and the quantity of second exhaust holes 221 are the same, and a plurality of avoidance holes 31 and the plurality of second exhaust holes 221 are provided in a one-to-one correspondence. According to this setting, when each battery cell 10 discharges gas through the explosion-proof portion, the discharged gas may be discharged from the battery pack 100 through the avoidance hole 31, the second exhaust hole 221, and the first exhaust hole 2111 that are provided corresponding to the battery cell 10.

Further, the heat conduction portion 30 may be constructed as a thermally-conductive adhesive. This setting enables the heat conduction portion 30 to have both a heat conduction function and a function of fastening the battery cell 10, so that mounting firmness of the battery cell 10 can be ensured, and the battery cell 10 can be prevented from being displaced relative to the heat exchange assembly 20 during use. This helps improve the use safety of the battery pack 100.

In some embodiments of this application, as shown in FIG. 1 and FIG. 2, the battery pack 100 further includes a mounting support 40. The mounting support 40 is fastened to the heating member 22, and the mounting support 40 has an assembly hole 41. The heat conduction portion 30 is located in the assembly hole 41. As shown in FIG. 2, the mounting support 40 may be provided with a third positioning hole 42. In the up-down direction shown in FIG. 2, the third positioning hole 42 directly faces the second positioning hole 222. The third positioning hole 42 cooperates with the second positioning hole 222, so that a relative position of the mounting support 40 and the heating member 22 can be ensured to be accurate. Optionally, an adhesive may be applied to a surface of the mounting support 40 that is close to the heating member 22, then the third positioning hole 42 and the second positioning hole 222 are used for positioning, and the mounting support 40 is bonded to the heating member 22. Further, the assembly hole 41 may also be used to assemble the battery cell 10 to fasten the battery cell 10.

There are a plurality of assembly holes 41, and the quantity of assembly holes 41 is the same as the quantity of battery cells 10. In the up-down direction shown in FIG. 2, the plurality of battery cells 10 and the plurality of assembly holes 41 are provided in a one-to-one correspondence. The heat conduction portion 30 is disposed in the assembly hole 41. In an embodiment, the heat conduction portion 30 is the thermally-conductive adhesive. This arrangement can limit a position of the battery cell 10 in a radial direction to prevent the battery cell 10 from being displaced relative to the heat exchange assembly 20 due to vibration, thereby further improving the use safety of the battery pack 100.

In some embodiments of this application, as shown in FIG. 1, FIG. 2, and FIG. 6, the battery pack 100 also includes a top support 50. The top support 50 is disposed at one end of the battery cell 10 that is away from the heating member 22. That is, in the up-down direction shown in FIG. 2, the top support 50 is mounted at an upper end of the battery cell 10, and the top support 50 may be clamped with the plurality of battery cells 10. The top support 50 is disposed, so that mounting firmness of the battery cell 10 can be further ensured, and the battery cell 10 can be protected.

In some embodiments of this application, as shown in FIG. 2, in the up-down direction shown in FIG. 2, the heat exchange assembly 20 is disposed below the battery cell 10, and the heat exchange assembly 20 can support the battery cell 10. In other words, the battery cell 10 is disposed above the heat exchange assembly 20, and the battery cell 10 is in contact with the thermally-conductive adhesive applied on the heating member 22 of the heat exchange assembly 20. This arrangement can protect the battery cell 10 by using the heat exchange assembly 20 disposed below the battery cell 10 to prevent the battery cell 10 from being directly squeezed in the height direction.

In some embodiments of this application, an outer surface of the cooling member 21 has an insulation layer. Optionally, an insulation material may be sprayed on the outer surface of the cooling member 21 to form the insulation layer. The insulation layer may be an epoxy coating or another insulation layer. This is not limited in this application. Optionally, the heat conduction surface of the cooling member 21 may be coated with the insulation layer, or the entire outer surface of the cooling member 21 may be coated with the insulation layer. The outer surface of the cooling member 21 is coated with the insulation layer, so that an insulation requirement between the cooling member 21 and the battery cell 10 can be met, and an insulation requirement between the cooling member 21 and the heating member 22 can be met. This can improve the use safety of the battery pack 100.

In some embodiments of this application, as shown in FIG. 2 and FIG. 3, the heating member 22 is constructed as a plate-shaped structure. The heating member 22 is constructed as the plate-shaped structure, so that a surface of the heating member 22 that faces the heat conduction surface can be adapted to the heat conduction surface, and the heating member 22 and the cooling member 21 have a large contact area. This helps improve heat conduction efficiency between the heating member 22 and the cooling member 21.

Optionally, the heating member 22 may be a heating film. The heating film may have a plurality of resistance wires. Heating effect is achieved by energizing the resistance wires to heat the resistance wires. Optionally, the heating film has an outer insulation film, and the outer insulation film may be made of PI (Polyimide). Certainly, the outer insulation film may alternatively be made of another material. This is not limited in this application. This configuration can meet an insulation requirement between the heating member 22 and the battery cell 10 and can also meet the insulation requirement between the cooling member 21 and the heating member 22, thereby further improving working reliability of the battery pack 100.

In some embodiments of this application, as shown in FIG. 5, a heat exchange flow channel 213 is formed in the cooling member 21. The cooling member 21 has a medium inlet and a medium outlet, and the medium inlet and the medium outlet both communicate with the heat exchange flow channel 213. Optionally, as shown in FIG. 1 to FIG. 6, the cooling member 21 may further include an adapter 24. The adapter 24 may be welded to the second cooling plate 212. The adapter 24 communicates with both the medium inlet and the medium outlet. Optionally, the first cooling plate 211 may be stamped to form a recessed deformation portion, and then the second cooling plate 212 and the first cooling plate 211 may be brazed together to define the heat exchange flow channel 213.

Further, as shown in FIG. 1 to FIG. 6, the cooling member 21 may further include a liquid inlet pipe 25, a liquid outlet pipe 26, and a liquid inlet and outlet joint 27. One end of the liquid inlet pipe 25 and one end of the liquid outlet pipe 26 may both be crimped to the adapter 24. One end of the liquid inlet pipe 25 communicates with the medium inlet, and one end of the liquid outlet pipe 26 communicates with the medium outlet. In addition, the other end of the liquid inlet pipe 25 is connected to the liquid inlet and outlet joint 27, and the other end of the liquid outlet pipe 26 is connected to the liquid inlet and outlet joint 27.

An example in which the battery pack 100 is the battery pack 100 of a vehicle is used for description. When the battery cell 10 needs to be cooled, the coolant, in a liquid phase, enters the heat exchange flow channel 213 from a condenser of the vehicle through the liquid inlet and outlet joint 27, the liquid inlet pipe 25, and the medium inlet, and exchanges heat with the battery cell 10. As the coolant flows in the heat exchange flow channel 213, the coolant evaporates from the liquid phase to a gas-liquid mixed phase. As a flow path becomes increasingly long, the coolant gradually changes from the gas-liquid mixed phase to a gas phase, and then leaves the battery pack 100 through the medium outlet, the liquid outlet pipe 26, and the liquid inlet and outlet joint 27. Alternatively, in another embodiment, the coolant exchanges heat with the battery cell 10 to reduce the temperature of the battery cell 10, but the coolant does not undergo phase change, that is, the coolant always remains in the liquid phase.

It should be noted that a specific shape of the heat exchange flow channel 213 is comprehensively determined based on an area boundary of the battery cell 10, an arrangement of the battery cell 10, heating power of the battery cell 10, height space of the battery pack 100, and a position of the liquid inlet and outlet joint 27. This is not specifically limited in this application. In addition, the cooling member 21 may be partially lengthened according to actual requirements, and a vehicle end may be directly connected to the adapter 24 of the cooling member 21, so that intermediate connection components such as the liquid inlet pipe 25, the liquid outlet pipe 26, and the liquid inlet and outlet joint 27 can be omitted.

In some embodiments of this application, as shown in FIG. 5, an exhaust flow path 214 is formed on one side of the cooling member 21 that is away from the battery cell 10. That is, in the height direction of the battery pack 100 (the up-down direction shown in FIG. 2), the exhaust flow path 214 is formed on the lower side of the cooling member 21, and the exhaust flow path 214 communicates with the exhaust channel 23. If the battery cell 10 has a thermal runaway problem, gas generated in the battery cell 10 may be discharged from the explosion-proof portion. The gas discharged from the explosion-proof portion may directly enter the exhaust flow path 214 through the exhaust channel 23 to be discharged from the battery pack 100.

Further, a housing of the battery pack 100 is provided with a gas outlet hole. The gas outlet hole communicates with the exhaust flow path 214, and the gas entering the exhaust flow path 214 may leave the battery pack 100 through the gas outlet hole.

In some embodiments of this application, as shown in FIG. 5, a protrusion is provided on one side of the cooling member 21 that is away from the heating member 22, the protrusion has the heat exchange flow channel 213 inside, and the exhaust flow path 214 is formed between two adjacent protrusions. That is, at least a part of a structure of the exhaust flow path 214 is formed by the projection. In this way, the protrusion can have a plurality of functions. The protrusion can be used as a flow channel for circulating a heat exchange medium and can also be used as a structure for forming the exhaust flow path 214. This helps save mounting space in the battery pack 100 and increase the capacity of the battery pack 100.

In some embodiments of this application, as shown in FIG. 5, the heat exchange flow channel 213 includes a plurality of heat exchange sub-flow channels 2131. In the height direction of the battery pack 100 (that is, the up-down direction shown in FIG. 2), a projection of the first exhaust hole 2111 is located between projections of two adjacent heat exchange sub-flow channels 2131. In other words, a plane is set, and a normal of the plane is parallel to the height direction of the battery pack 100. A projection of the first exhaust hole 2111 on the plane is located between projections of two adjacent heat exchange sub-flow channels 2131 on the plane.

In some optional embodiments of this application, in the height direction of the battery pack 100 (that is, the up-down direction shown in FIG. 1), there is an orthographic projection of at least one heat exchange sub-flow channel 2131 between orthographic projections of two adjacent rows of battery groups. In other words, a plane is set, and a normal of the plane is parallel to the height direction of the battery pack 100. An orthographic projection of at least one heat exchange sub-flow channel 2131 on the plane is located between orthographic projections of two adjacent rows of battery groups on the plane. This arrangement enables the heat exchange flow channel 213 to exchange heat with all battery cells 10, so that temperatures of the battery cells 10 in the battery pack 100 are all within the appropriate temperature range.

In some optional embodiments of this application, the orthographic projection of the at least one heat exchange sub-flow channel 2131 on the plane has a partially overlapping area with the orthographic projections of the two adjacent rows of battery groups on the plane. This arrangement can increase a heat exchange rate between the cooling member 21 and the battery cell 10, and can ensure cooling effect of the cooling member 21.

In some optional embodiments of this application, the quantity of projections of the heat exchange sub-flow channels 2131 between the explosion-proof portions of every two adjacent rows of battery groups is equal. For example, there is one projection of the heat exchange sub-flow channel 2131 between the explosion-proof portions of every two adjacent rows of battery groups. This can ensure that a heat exchange condition of each battery cell 10 is approximately the same, and helps make the temperatures of the plurality of battery cells 10 tend to be consistent.

In some optional embodiments of this application, the heat exchange sub-flow channel 2131 may be of a straight line type, or the heat exchange sub-flow channel 2131 may alternatively be of a wavy line type. This is not specifically limited in this application.

Further, as shown in FIG. 5, the heat exchange flow channel 213 also includes a liquid inlet flow channel 215 and a liquid outlet flow channel 216. The plurality of heat exchange sub-flow channels 2131 all communicate between the liquid inlet flow channel 215 and the liquid outlet flow channel 216. In other words, one end of the heat exchange sub-flow channel 2131 communicates with the liquid inlet flow channel 215, and the other end of the heat exchange sub-flow channel 2131 communicates with the liquid outlet flow channel 216. In addition, the liquid inlet flow channel 215 communicates with the medium inlet of the cooling member 21, and the liquid outlet flow channel 216 communicates with the medium outlet of the cooling member 21.

In the height direction of the battery pack 100, the orthographic projection of the heat exchange sub-flow channel 2131 is located within an orthographic projection of the heat conduction surface, and at least part of orthographic projections of the liquid inlet flow channel 215 and the liquid outlet flow channel 216 is located outside the orthographic projection of the heat conduction surface.

An electric apparatus according to an embodiment of this application includes the battery pack 100 according to the foregoing embodiments. A heat exchange assembly 20 including a cooling member 21 and a heating member 22 that are stacked is disposed, so that a battery cell 10 can not only be cooled, but can also be heated. Therefore, when the battery cell 10 is in a low temperature state, the heat exchange assembly 20 can be used to increase a temperature of the battery cell 10, so that the temperature of the battery cell 10 is within an appropriate temperature range, and working performance of the battery pack 100 is improved.

In descriptions of this application, it will be understood that orientations or position relationships indicated by the terms such as "central", "longitudinal", "lateral", "length", "width", "thickness", "above", "below", "front", "back", "left", "right", "vertical", "horizontal", "top", "bottom", "inner", "outer", "clockwise", "counter-clockwise", "axial", "radial", and "circumferential " are based on orientations or position relationships shown in the accompanying drawings, and are merely intended to describe this application and simplify the descriptions, rather than indicating or implying that the mentioned apparatus or component needs to have a specific orientation or needs to be constructed and operated in a specific orientation. Therefore, such terms should not be construed as a limitation of this application.

In addition, the terms "first" and "second" are merely intended for a purpose of description, and shall not be understood as an indication or implication of relative importance or an implicit indication of the quantity of indicated technical features. Therefore, a feature limited by "first" or "second" may explicitly or implicitly include one or more features. In the descriptions of this application, unless otherwise exactly and specifically specified, "a plurality of" means two or more.

In this application, unless otherwise exactly specified and limited, the terms such as "mount", "connected to", "connection", and "fasten" will be understood in a broad sense. For example, the term "connection" may be a fixed connection, may be a detachable connection, or may be integration; may be a mechanical connection or may be an electrical connection; or may be a direct connection, may be an indirect connection implemented by using an intermediate medium, or may be communication inside two elements or an interaction relationship between two elements. A person of ordinary skill in the art may understand specific meanings of the foregoing terms in this application based on specific cases.

In this application, unless otherwise exactly specified and limited, when a first feature is "above" or "below" a second feature, the first feature may be in direct contact with the second feature, or the first feature may be in indirect contact with the second feature through an intermediate medium. In addition, that the first feature is "on", "above", and "over" the second feature may be that the first feature is right above or obliquely above the second feature, or merely mean that a horizontal height of the first feature is greater than that of the second feature. That the first feature is "under", "below", and "underneath" the second feature may be that the first feature is right below or obliquely below the second feature, or merely mean that the horizontal height of the first feature is less than that of the second feature.

In descriptions of this specification, reference to the terms "one embodiment", "some embodiments", "example", "specific example", or "some examples" means that specific features, structures, materials, or characteristics described with reference to the embodiment or example are included in at least one embodiment or example of this application. In this specification, the exemplary representations of the foregoing terms do not necessarily refer to the same embodiment or example. In addition, the described specific features, structures, materials, or characteristics may be combined in any appropriate manner in any one or more embodiments or examples. In addition, in a case of no mutual contradiction, a person skilled in the art can combine or group different embodiments or examples described in this specification and features of the different embodiments or examples.

Although embodiments of this application are shown and described above, it may be understood that the foregoing embodiments are exemplary and cannot be understood as a limitation on this application. A person of ordinary skill in the art may change, modify, replace, and vary the foregoing embodiments within the scope of this application.

## Claims

1. A battery pack, comprising:
a battery cell; and
a heat exchange assembly, wherein the heat exchange assembly cooperates with the battery cell to exchange heat with the battery cell, the heat exchange assembly comprises a cooling member and a heating member that are stacked, the cooling member is configured to cool the battery cell, the heating member is configured to heat the battery cell, and the heat exchange assembly has an exhaust channel corresponding to an explosion-proof portion of the battery cell.

2. The battery pack according to claim 1, wherein the battery cell is of a cylindrical shape, and in a height direction of the battery pack, one end of the battery cell that is away from the heat exchange assembly has a terminal pole, and one end of the battery cell that is close to the heat exchange assembly has the explosion-proof portion.

3. The battery pack according to claim 1 or 2, wherein the heating member is fastened to the cooling member and is located between the cooling member and the battery cell.

4. The battery pack according to any one of claims 1 to 3, wherein the cooling member has a heat conduction surface opposite to the battery cell, and the heating member is disposed on the heat conduction surface.

5. The battery pack according to claims 4, wherein a recess is provided on one side of the cooling member that faces the heating member, the recess has the heat conduction surface, and the heating member is disposed in the recess.

6. The battery pack according to claim 5, wherein a depth of the recess is equal to a thickness of the heating member.

7. The battery pack according to any one of claims 1 to 6, wherein the cooling member has a first exhaust hole, the heating member has a second exhaust hole corresponding to the first exhaust hole, and the first exhaust hole and the second exhaust hole form the exhaust channel.

8. The battery pack according to any one of claims 1 to 7, further comprising: a heat conduction portion, wherein the heat conduction portion is disposed between the battery cell and the heating member to conduct heat between the battery cell and the heating member, the heat conduction portion has an avoidance hole for avoiding the explosion-proof portion, and the avoidance hole is opposite to the exhaust channel.

9. The battery pack according to claim 8, further comprising: a mounting support, the mounting support is fastened to the heating member and has an assembly hole, and the heat conduction portion is located in the assembly hole.

10. The battery pack according to any one of claims 1 to 9, wherein the heat exchange assembly is disposed below the battery cell to support the battery cell.

11. The battery pack according to any one of claims 1 to 10, wherein the heating member is constructed as a plate-shaped structure.

12. The battery pack according to any one of claims 1 to **11,** wherein a heat exchange flow channel is formed in the cooling member, the cooling member has a medium inlet and a medium outlet, and the medium inlet and the medium outlet both communicate with the heat exchange flow channel.

13. The battery pack according to claim 12, wherein an exhaust flow path is formed on one side of the cooling member that is away from the battery cell, and the exhaust flow path communicates with the exhaust channel.

14. The battery pack according to claim 13, wherein a protrusion is provided on one side of the cooling member that is away from the heating member, the protrusion has the heat exchange flow channel inside, and the exhaust flow path is formed between two adjacent protrusions.

15. An electric apparatus, comprising the battery pack according to any one of claims 1 to 14.
